(19) Europäisches Patentamt European Patent Office Office européen des brevets

(11) **EP 4 600 772 A1**

(12) **EUROPEAN PATENT APPLICATION**

(43) Date of publication:
**13.08.2025 Bulletin 2025/33**

(21) Application number: **24157120.7**

(22) Date of filing: **12.02.2024**

(51) International Patent Classification (IPC):
*G05B 19/418* (2006.01)

(52) Cooperative Patent Classification (CPC):
**G05B 19/41885;** G05B 2219/32187;
G05B 2219/32193

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft 80333 München (DE)**

(72) Inventors:
• **BUSCH, Julian**
 **Newtown, PA, 18940 (US)**
• **ZHANG, Tongtao**
 **Lawrenceville, NJ, 08648 (US)**
• **RIESKAMP, Timo**
 **80634 München (DE)**
• **LEBACHER, Michael**
 **84513 Töging am Inn (DE)**

(74) Representative: **HKW Intellectual Property PartG mbB**
 **Theresienhöhe 12**
 **80339 München (DE)**

(54) **SYSTEM FOR PRODUCT QUALITY PREDICTION AND OPTIMIZATION FOR MULTI-STAGE PRODUCTION PROCESSES**

(57) A manufacturing system performs a method of manufacturing an item. The system includes a first stage for manufacturing an item, a second stage for manufacturing the item, wherein the first stage precedes the second stage, and a processor. The processor obtains a first process parameter for a first stage of a manufacturing process, creates a model that predicts a quality parameter for the second stage based on the first process parameter, determines, using the model, a value of the first process parameter at which a different between the predicted quality parameter and a target quality parameter is less than a selected criterion, and adjusts the first process parameter to the value. The item is manufactured with the value of the first process parameter.

FIG. 1

EP 4 600 772 A1

**Description**

BACKGROUND

Aspects of the present invention generally relate to maximizing a product quality while minimizing resource consumption for a manufacturing process or industrial process.

A manufacturing process includes multiple stages during which an article is taken from an unformed material to a finished product. Each stage involves an action which is performed on the article. For example, a manufacturing process for an automobile part can include a first stage in which a metallic article is pressed and a second stage in which the pressed article is painted. A stage can be parameterized by one or more process parameters which control the action being performed at the stage and/or by one or more sensor parameters that measure various aspects of the stage, such as material properties, results of the action, etc. These parameters can be used to determine a quality of the article after the stage is completed and to adjust the process parameters for the stage. However, adjusting a parameter to optimize quality at one stage can affect quality at a downstream stage. For example, while oil can be applied at the first stage to improve the quality of the pressing stage, the presence of oil at the painting stage decreases the quality at the painting stage. Therefore, it is desirable to be able to determine quality at several stages of the manufacturing process.

SUMMARY

Disclosed herein is a method of manufacturing an item. The method includes obtaining a first process parameter for a first stage of a manufacturing process , wherein the first stage precedes a second stage of the manufacturing process, creating a model that predicts a quality parameter for the second stage based on the first process parameter, determining, using the model, a value of the first process parameter at which a difference between the predicted quality parameter and a target quality parameter is less than a selected criterion, adjusting the first process parameter to the value, and manufacturing the item with the value of the first process parameter.

In addition to the one or more features described herein, the method further includes obtaining a second process parameter of the second stage, creating the model that predicts the quality parameter for the second stage based on the first process parameter and the second process parameter, determining, using the model, a first value of the first process parameter and a second value of the second process parameter at which the difference between the predicted quality parameter and the target quality parameter is less than the criterion, and adjusting the first process parameter to the first value and the second process parameter to the second value.

In addition to the one or more features described herein, creating the model further includes training a neural network based on training data of the manufacturing process, wherein the training data includes the first process parameter and the second process parameter and the neural network includes a first module for the first stage and a second module for the second stage and the predicts a first quality parameter at the first stage and a second quality parameter at the second stage.

In addition to the one or more features described herein, the first module passes a latent representation encoding the first process parameter to the second module.

In addition to the one or more features described herein, the method further includes applying a constraint to a range of optimization for the first quality parameter and the second quality parameter.

In addition to the one or more features described herein, the constraint is a U-shaped barrier function.

In addition to the one or more features described herein, the neural network is a graph neural network.

Also disclosed herein is a system for manufacturing an item. The system includes a processor configured to obtain a first process parameter for a first stage of the manufacturing process, wherein the first stage precedes a second stage of the manufacturing process, create a model that predicts a quality parameter for the second stage based on the first process parameter, determine, using the model, a value of the first process parameter at which a difference between the predicted quality parameter and a target quality parameter is less than a selected criterion, adjust the first process parameter to the value, and manufacture the item with the value of the first process parameter.

In addition to the one or more features described herein, the processor is further configured to obtain a second process parameter of the second stage, create the model that predicts the quality parameter for the second stage based on the first process parameter and the second process parameter, determine, using the model, a first value of the first process parameter and a second value of the second process parameter at which the difference between the predicted quality parameter and the target quality parameter is less than the criterion, and adjust the first process parameter to the first value and the second process parameter to the second value.

In addition to the one or more features described herein, the processor is further configured to create the model by training a neural network based on training data of the manufacturing process, wherein the training data includes the first process parameter and the second process parameter and the neural network includes a first module for the first stage and a second module for the second stage and the predicts a first quality parameter at the first stage and a second quality parameter at the second stage.

In addition to the one or more features described herein, the processor is further configured to pass a latent representation encoding the first process parameter from the first module to the second module.

In addition to the one or more features described herein, the processor is further configured to apply a constraint to a range of optimization for the first quality parameter and the second quality parameter.

In addition to the one or more features described herein, the constraint is a U-shaped barrier function.

In addition to the one or more features described herein, the neural network is a graph neural network.

Also disclosed herein is a manufacturing system. The manufacturing system includes a first stage for manufacturing an item, a second stage for manufacturing the item, wherein the first stage precedes the second stage, and a processor. The processor is configured to obtain a first process parameter for the first stage, create a model that predicts a quality parameter for the second stage based on the first process parameter, determine, using the model, a value of the first process parameter at which a difference between the predicted quality parameter and a target quality parameter is less than a selected criterion, adjust the first process parameter to the value, and manufacture the item with the value of the first process parameter.

In addition to the one or more features described herein, the processor is further configured to obtain a second process parameter of the second stage, create the model that predicts the quality parameter for the second stage based on the first process parameter and the second process parameter, determine, using the model, a first value of the first process parameter and a second value of the second process parameter at which the difference between the predicted quality parameter and the target quality parameter is less than the criterion, and adjust the first process parameter to the first value and the second process parameter to the second value.

In addition to the one or more features described herein, the processor is further configured to create the model by training a neural network based on training data of the manufacturing process, wherein the training data includes the first process parameter and the second process parameter and the neural network includes a first module for the first stage and a second module for the second stage and the predicts a first quality parameter at the first stage and a second quality parameter at the second stage.

In addition to the one or more features described herein, the processor is further configured to pass a latent representation encoding the first process parameter from the first module to the second module.

In addition to the one or more features described herein, the processor is further configured to apply a constraint to a range of optimization for the first quality parameter and the second quality parameter.

In addition to the one or more features described herein, wherein the constraint is a U-shaped barrier function.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:

FIG. 1 shows a manufacturing process suitable for manufacturing an article, in an illustrative embodiment;

FIG. 2 shows a production graph representing a production process in an illustrative embodiment;

FIG. 3 shows a production graph representing a parallel production process, in an illustrative embodiment;

FIG. 4 shows a production graph for a multi-stage production process, in an illustrative embodiment;

FIG. 5 shows a production graph including the production graph of FIG. 4 and some illustrative quality gates and data matrices;

FIG. 6 shows a model architecture for a neural network, in an illustrative embodiment; and

FIG. 7 shows a diagram of a manufacturing system for performing the manufacturing process of FIG. 1, in an embodiment.

DETAILED DESCRIPTION

The figures discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

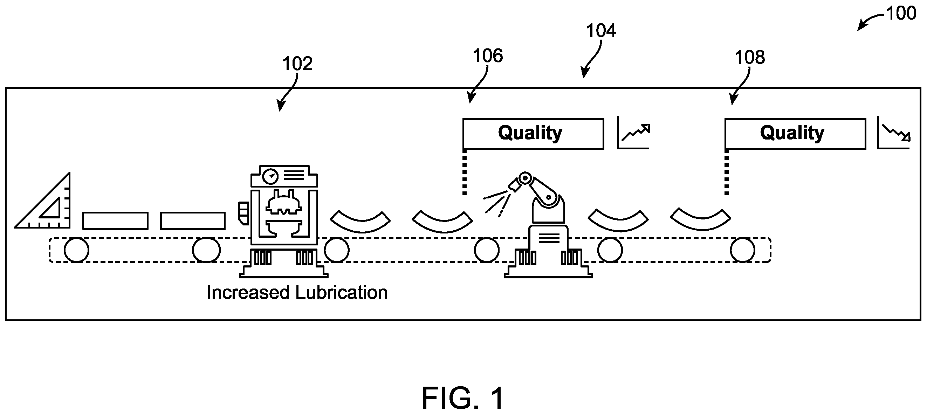

FIG. 1 shows a manufacturing process 100 suitable for manufacturing an article, in an illustrative embodiment. The manufacturing process 100 includes a first production stage 102 and a second production stage 104 that follows the first production stage 102. A first operation is performed on the article at the first production stage 102. The article is then sent to the second production stage 104 where a second operation is performed. A first quality gate 106 can be placed after the first production stage 102 (and before the second production stage 104), and a second quality gate 108 can be placed after the second production stage 104. A quality gate provides an examination and evaluation of the article, which can be a number or a vector.

For purposes of illustrative, the manufacturing process 100 shown in FIG. 1 forms a part for a vehicle. The first production stage receives sheet metal and presses the metal into a desired shape. The second production stage is a painting stage at which the pressed article is painted. Oil can be applied to the article at the pressing stage to increase the quality of the pressed article. However, the presence of oil at the painting stage decreases the quality of the painting process.

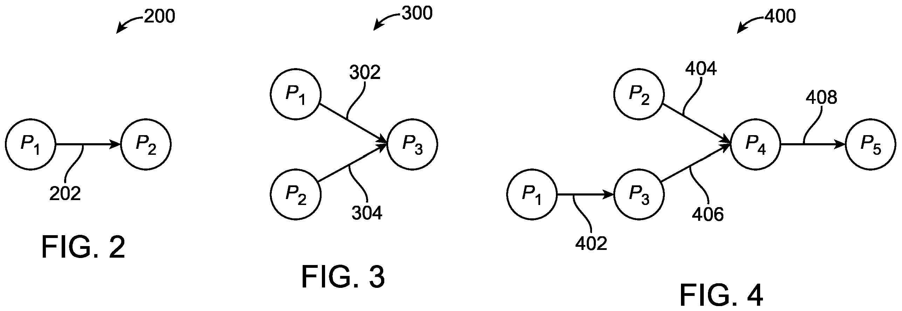

FIG. 2 shows a production graph 200 representing a production process in an illustrative embodiment. The production graph 200 represents a two-stage sequential production process, such as shown in FIG. 1. The production graph 200 includes nodes which corresponds to, or represent, a production step. Edges between the nodes indicate dependencies between the production steps. For the two-stage sequential production process, the production graph 200 includes a first node ($P_1$) and a second node (P2). Edge 202 between the first node P1 and the second node P2 indicates that the first production step precedes the second production step. With respect to FIG. 1, the first node P1 represent the pressing stage and the second node P2 represents the painting stage.

FIG. 3 shows a production graph 300 representing a parallel production process, in an illustrative embodiment. The production graph 300 includes three nodes. A first node (P1) represents a first production step, a second node (P2) represents a second production step (P2), and a third node (P3) represents a third production step. The parallel production process is represented by the first node P1 and the second node P2 occurring side-by-side, with a first edge 302 that connects the first node P1 to the third node P3 and a second edge 304 that connects the second node P2 to the third node P3. As indicated by the production graph 300, the first processing step and the second processing step are performed in parallel with each other and their outputs are provided as input to the third processing step. The first processing step can be performed at the same time as the second processing step or at a different time as the second processing step.

FIG. 4 shows a production graph 400 for a multi-stage production process, in an illustrative embodiment. The production graph 400 includes five nodes P= (P1, P2, P3, P4, P5), each representing a production step. The first node (P1) and the third node (P3) are connected by edge 402, which indicates a first production step and a third productions step are performed sequentially. The second production step is performed in parallel with a third production step, as indicated by the parallel placement of the second node (P2) and the third node (P3). Edge 404 connects the second node P2 and the fourth node P4 to indicate that the output of the second production step is input to the fourth production step. Edge 406 connects the third node P3 and the fourth node P4 to indicate that the output of the third production step is input to the fourth production step. The fourth node (P4) and the fifth node (P5) are connected by edge 408 to indicate that the fourth production step and the fifth production step are performed sequentially.

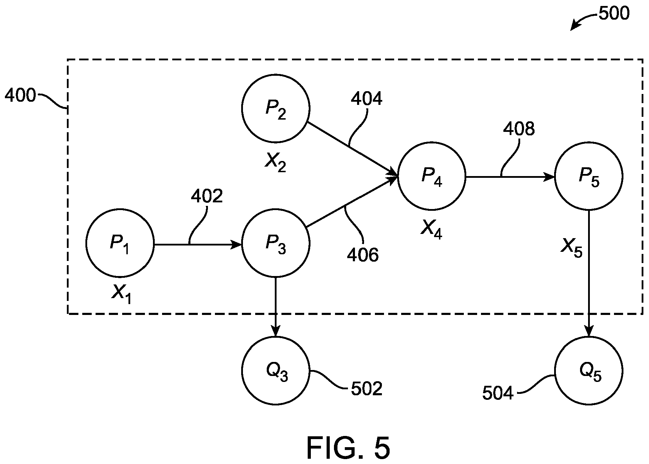

FIG. 5 shows a production graph 500 including the production graph 400 of FIG. 4 and some illustrative quality gates and data matrices. Data matrices are shown at nodes P1, P2, P4 and P5. No data matrix is shown for node P3. Thus, X = (x1, x2, x4, x5). A first quality gate Q3 is associated with the third node P3. A second quality gate Q5 is associated with the fifth node P5. Thus, Q= (q3, q5). A quality gate performs calculation to determine the quality of an article after the associated process step.

In general, a production process $P$ can be subdivided into $L$ production steps $P_1, ..., P_L$ that are organized as a production graph. Each production step can include step-specific data. The data can be represented as a data matrix $X$. For a production process having $L$ production steps, the data matrix $X$ can be represented as a series of $L$ data matrices, as shown in Eq. (1):

$$X = (x_1, ..., x_L) \qquad\qquad \text{Eq. (1)}$$

where $x_1$ is the data matrix for an $l^{th}$ production step. The order of any data matrix $x_1$ is fixed but is not necessarily the same as the order of another data matrix. In general, the number of rows is the same for each matrix, while each matrix can have its individual numbers of columns. Data within a same row of a data matrix corresponds to a same observation (i.e., the same part being processed).

Individual entries of a data matrix $x_1$ are indicated as $x_{l,i,j}$, where $l = 1, ..., L$ denotes the production step, $i = 1, ..., n$ gives the number of observations for the production step, and $j = 1, ..., k_l$ where $k_l$ denotes the number of sensor measurements for the production step. If a production step $l$ does not provide useful information, the entries $x_l$ for the corresponding data matrix can be set to a neutral value (e.g., "0"). Entries in a data matrix can be of different types (e.g., a time series, tabular data matrices, etc.). For ease of explanation, only data matrices are described herein.

A data matrix can be written as $x_l = (\overline{x}_l, \dot{x}_l)$ where $\overline{x}_l$ is a first set of columns including measurements of the $l^{th}$ stage that cannot be changed and $\dot{x}_l$ is a second set of columns including parameters of the $1^{th}$ stage which can be adjusted (adjustable parameters). The index of the last column of the non-adjustable parameters $\overline{x}_l$, is herein denoted as $\tilde{k}_l$. This index distinguishes between the columns including the non-adjustable parameters and the columns including the adjustable parameters. Adjustable parameters include process parameters and non-adjustable parameters include, for example, sensor measurements representing characteristics of the input material. Adjustable parameters $\dot{x}_l$ can be adjusted to optimize a quality at the associated stage.

Quality gate measurements are generally indicated by $Q = (q_r)$ with $r = 1, ..., R$. The number of quality gates can be equal to or less than the number of production stages. Thus, R<=L. Missing quality measurements are not considered for computation of loss or objective functions. Quality measurements can be multi-variate (e.g., multiple quality measurements or product quality combined with production time).

In an embodiment, a prediction function is determined for a selected stage of the manufacturing process that predicts quality or a quality parameter at the selected stage. A neural network is trained on training data to receive inputs (e.g., process parameters, sensor parameters) from the selected stage and output the prediction function. The trained neural network can then be used during a manufacturing operation to monitor the manufacturing process and/or to determine a value(s) for the one or more process parameters that optimizes a quality or quality parameter for the selected stage. Relevant process parameters ( or adjustable parameters) can then be adjusted to the optimized values (s) to achieve a desired quality or desired quality parameter for the manufacturing process.

The prediction function for a current step of the manufacturing process is based on data from the current step as well as data from any previous step of the process that leads into, or precedes, the current step. This previous step referred to herein as a predecessor step. The prediction function for the current step can also include an adjustable parameter from a predecessor step in determining value at the current step. This adjustable parameter from the predecessor step can then be adjusted to achieve a desired quality at the current step.

The prediction function $f$ predicts a product quality $Q$ based on process data $X$. The quality at a selected step $r$ depends on process data associated with selected step $r$ and any predecessor steps in the production graph, as indicated in Eq. (2)

$$f_r(x_r, \{x_i | i \in pred(r)\}) \approx q_r \qquad \text{Eq. (2)}$$

where *pred(r)* indicates "predecessor of". As an example, in FIG. 5, the quality $q_3$ is dependent on data $x_3$ from node P3 and data $x_1$ from node P1.

A neural network is trained to determine an individual prediction function $f_r$ at one or more of the process steps of the manufacturing process. The neural network can be trained to jointly predict all qualities $q_r$ of the production graph in an end-to-end fashion (i.e., moving left to right in the production graph 500).

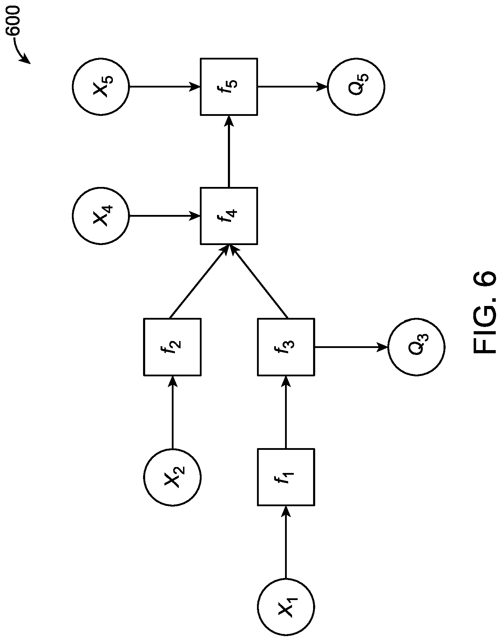

FIG. 6 shows a model architecture 600 for a neural network, in an illustrative embodiment. The model architecture 600 is related to the production graph 500 of FIG. 5. The neural network includes a plurality of modules ($f_1, f_2, f_3, f_4, f_5$) corresponding to the production steps (P1, P2, P3, P4, P5), respectively. Each module receives the data from the corresponding process step (including both process data and sensor measurement of the corresponding process step). For example, module $f_1$ receives data $x_1$, module $f_2$ receives data $x_2$, module $f_4$ receives data $x_4$ and module $f_5$ receives data $x_5$. A given module creates a latent representation of the process parameters and passes the latent representation to a subsequent, or downstream module. For example, module $f_1$ receives data $x_1$ and passes a latent representation of the data to the subsequent module $f_3$. A latent representation encodes the process data of the predecessor steps. Thus, a latent representation for a current step $r$ is based on data from the current step and data from predecessor steps, as shown in Eq. (3)

$$\{f_i \mid i \in pred(r)\} \rightarrow f_r \qquad \text{(Eq. (3)}$$

A selected module $f_r$ combines data from the predecessor steps with the current process data and produces a latent representation to be passed to the next module. The module $f_r$ also outputs a quality $q_r$. For example, module $f_3$ receives the latent representation from the module $f_1$ and creates a latent representation for the module $f_4$.

In various embodiments, a module $f_r$ of the neural network can be a Multi-Layer-Perceptron (MLP) that concatenates incoming feature vectors and computes latent representations and predictions using dense layers. In another embodiment, the neural network is a graph neural network (GNN) with shared parameters over all process steps, i.e., $f_r = f$ for all $r$. In another embodiment, the neural network can be a Graph Convolutional Network.

Message passing (i.e. passing of a latent representation) is only performed along directed edges in the production graph in the forward direction. Message passing does not need to be performed synchronously or for a fixed number of rounds. Message passing can start at a source node (node with indegree 0) and continue along outgoing edges of the already processed nodes in a breadth-first search fashion, until the final node of the manufacturing processed is reached. A node only performs neighborhood aggregation over its incoming neighbor nodes if all of these nodes have already performed neighborhood aggregation. Since the number of input and output features can vary for each production step, an additional input and output transformation can be employed each step. An output transformation can be modeled as an individual node specific MLP.

The neural network can be an attention-based neural network. A module of the attention-based neural network allows its corresponding prediction model to learn dependencies between a predicted quality $q_r$ and the various inputs (i.e., process parameters and measurements from the current step and predecessor steps). Skip connections can be used in the neural network to address long-range dependencies in the production graph.

The prediction model can be trained end-to-end using a gradientbased optimization method. A loss function can be created that aggregates errors incurred by the prediction model at each quality gate. An illustrative loss function is shown in Eq. (4):

$$L_{Pred}(X, Q) = \frac{1}{r}\sum_r |f_r(x_r, \{h_i \mid i \in pred(r)\}; \theta) - q_r| \to min_\theta \qquad \text{Eq. (4)}$$

where $h_i$ denotes a hidden representation learned by $f_i$ and $\theta$ denotes learnable parameters of the neural network. In an embodiment, the quality measures are univariate, non-negative, and are maximized. Quality scores can be normalized to a same scale. Optimization can be performed using gradient descent using gradients $\dfrac{\partial L_{Pred}}{\partial \theta}$.

The trained neural network prediction model disclosed herein can be used for continuous quality optimization. In quality optimization, the quality of a production step is optimized with respect to the changeable parameters $\dot{x}_l$. A desired or optimal quality $Q$ is achieved (given the non-changeable measurements $\bar{x}_l$ of the production steps) by optimizing a loss function with respect to the adjustable variables $\dot{x}_l$ of the production steps. The optimization can be achieved via finding values of the adjustable variables $\dot{x}_l$ that minimizes an activation maximization loss function ($L_{AM}$), as shown in Eq. (5):

$$\min_{\dot{x}} \underbrace{\left[-\sum_r l_r\big(f_r(\dot{x}_r, \bar{x}_r, \{h_i \mid i \in pred(r)\}; \theta)\big) + \sum_{l,j} \psi_{l,j}(\dot{x}_{l,j}) + \lambda L_{reg}\right]}_{L_{AM}}, \qquad \text{Eq. (5)}$$

where $l_r(y) = \max(0, 1 - t_r y)$ denotes a "margin loss" for each quality gate $q_r$. The loss for a module $r$ is set to zero when the quality at the module is larger than an "acceptable threshold" $t_r$ for the quality and increases linearly as the quality declines. This prevents the quality at a single quality gate from being optimized at the expense of the quality at remaining quality gates. Instead, once the quality for a selected gate reaches an acceptable quality level, it is not further optimized, allowing the optimization to at the quality at the other quality gates.

Referring back to FIG. 1, oil can be used on the article in the first process step to improve the quality of the pressing operation. However, the presence of oil in the second process step decreases the quality of the painting operation. Use of the margin loss reduces the possibility of increasing the amount of oil used in the first process step at the expense of the second process step. Combinations of multiple key performance indicators with and without constraints can be combined into a single loss function and subsequently optimized. Loss can be minimized for the trained neural network using gradient descent, during which gradients $\dfrac{\partial L_{AM}}{\partial \theta}$ are propagated through the network.

Boundary conditions are applied for each process parameter $\dot{x}_{l,j}$. The boundary conditions are expressed as shown in Eq. (6):

$$L_{l,j} \le \dot{x}_{l,j} \le U_{l,j} \qquad \text{Eq. (6)}$$

The loss function $\psi_{l,j}(\dot{x}_{l,j})$ of Eq. (5) is based on a selected process parameter is a U-shaped barrier function having limits are shown in Eq. (7):

$$\lim_{\epsilon \to 0} \psi_{l,j}(L_{l,j} + \epsilon) = \lim_{\epsilon \to 0} \psi_{l,j}(U_{l,j} - \epsilon) = \infty \qquad\qquad \mathrm{Eq(7)}.$$

The loss $\psi_{l,j}$ approaches infinity toward the limits of the interval ($L_{l,j}$, $U_{l,j}$) and approaches zero inside the interval. Thus, a negligible loss is incurred when all boundary conditions are satisfied. With respect to the example of FIG. 1, the amount of lubrication applied to the metal can be constrained to a reasonable range, which can be defined by a domain expert.

A regularization term $L_{reg}$ is added to the activation maximization loss of Eq. (5) since the optimal solution for a given process parameter is generally not unique. The regularization term can increase the loss for parameters that lead to high material or energy consumption. Thus, the regularization term allows the model to favor more material-efficient or energyefficient solution.

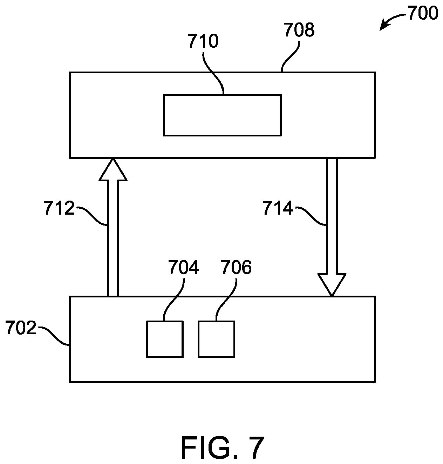

FIG. 7 is a diagram of a manufacturing system 700 for performing the manufacturing process 100 of FIG. 1, in an embodiment. The manufacturing system 700 includes the manufacturing hardware 702, including machinery 704 and sensors 706. Data 712 from the machinery 704 and sensors 706 is provided to a control system 708. The control system 708 includes a processor 710 that performs the methods disclosed herein to determine or predict quality parameters and to determine adjusted parameter values based on the quality parameters. The processor 710 sends one or more command signals 714 to the machinery 704 and sensors 706 to adjust any suitable adjustable parameters of the manufacturing process.

Those skilled in the art will recognize that, for simplicity and clarity, the full structure and operation of all systems suitable for use with the present disclosure is not being depicted or described herein. Instead, only so much of the physical systems as is unique to the present disclosure or necessary for an understanding of the present disclosure is depicted and described. The remainder of the construction and operation of the systems disclosed herein may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of a instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hardcoded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs). In particular, computer readable mediums can include transitory and non- transitory mediums, unless otherwise limited in the claims appended hereto.

Although an exemplary embodiment of the present disclosure has been described in detail, those skilled in the art will understand that various changes, substitutions, variations, and improvements disclosed herein may be made without departing from the spirit and scope of the disclosure in its broadest form. In particular, the features and operations of various examples described herein and in the incorporated applications can be combined in any number of implementations.

None of the description in the present application should be read as implying that any particular element, step, or function is an essential element which must be included in the claim scope: the scope of patented subject matter is defined only by the allowed claims. Moreover, none of these claims are intended to invoke 35 USC §112(f) unless the exact words "means for" are followed by a participle.

As used herein the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

## Claims

1. A method of manufacturing an item, comprising:

obtaining a first process parameter for a first stage of a manufacturing process , wherein the first stage precedes a second stage of the manufacturing process;

creating a model that predicts a quality parameter for the second stage based on the first process parameter;

determining, using the model, a value of the first process parameter at which a difference between the predicted quality parameter and a target quality parameter is less than a selected criterion;

adjusting the first process parameter to the value; and

manufacturing the item with the value of the first process parameter.

2. The method of claim 1, further comprising obtaining a second process parameter of the second stage;

creating the model that predicts the quality parameter for the second stage based on the first process parameter and the second process parameter;

determining, using the model, a first value of the first process parameter and a second value of the second process parameter at which the difference between the predicted quality parameter and the target quality parameter is less than the criterion; and

adjusting the first process parameter to the first value and the second process parameter to the second value.

3. The method of claim 2, wherein creating the model further comprising training a neural network based on training data of the manufacturing process, wherein the training data includes the first process parameter and the second process parameter and the neural network includes a first module for the first stage and a second module for the second stage and the predicts a first quality parameter at the first stage and a second quality parameter at the second stage.

4. The method of claim 3, wherein the first module passes a latent representation encoding the first process parameter to the second module.

5. The method of claim 3 or 4, further comprising applying a constraint to a range of optimization for the first quality parameter and the second quality parameter.

6. The method of claim 5, wherein the constraint is a U-shaped barrier function.

7. The method of any of claims 3-6, wherein the neural network is a graph neural network.

8. A system for manufacturing an item, comprising:
a processor configured to:

obtain a first process parameter for a first stage of a manufacturing process, wherein the first stage precedes a second stage of the manufacturing process;

create a model that predicts a quality parameter for the second stage based on the first process parameter;

determine, using the model, a value of the first process parameter at which a difference between the predicted quality parameter and a target quality parameter is less than a selected criterion;

adjust the first process parameter to the value; and

manufacture the item with the value of the first process parameter.

9. The system of claim 8, wherein the processor is further configured to:

obtain a second process parameter of the second stage;

create the model that predicts the quality parameter for the second stage based on the first process parameter and the second process parameter;

determine, using the model, a first value of the first process parameter and a second value of the second process parameter at which the difference between the predicted quality parameter and the target quality parameter is less than the criterion; and

adjust the first process parameter to the first value and the second process parameter to the second value.

10. The system of claim 9, wherein the processor is further configured to create the model by training a neural network based on training data of the manufacturing process, wherein the training data includes the first process parameter and the second process parameter and the neural network includes a first module for the first stage and a second module for the second stage and the predicts a first quality parameter at the first stage and a second quality parameter at the second stage.

11. The system of claim 10, wherein the processor is further configured to pass a latent representation encoding the first process parameter from the first module to the second module.

12. The system of claim 10 or 11, wherein the processor is further configured to apply a constraint to a range of optimization for the first quality parameter and the second quality parameter.

13. The system of claim 12, wherein the constraint is a U-shaped barrier function.

14. The system of any of claims 10-13, wherein the neural network is a graph neural network.

15. A manufacturing system, comprising:

   a first stage for manufacturing an item;
   a second stage for manufacturing the item, wherein the first stage precedes the second stage;
   a processor configured to:

      obtain a first process parameter for the first stage;
      create a model that predicts a quality parameter for the second stage based on the first process parameter;
      determine, using the model, a value of the first process parameter at which a difference between the predicted quality parameter and a target quality parameter is less than a selected criterion;
      adjust the first process parameter to the value; and
      manufacture the item with the value of the first process parameter.

16. The manufacturing system of claim 15, wherein the processor is further configured to:

   obtain a second process parameter of the second stage;
   create the model that predicts the quality parameter for the second stage based on the first process parameter and the second process parameter;
   determine, using the model, a first value of the first process parameter and a second value of the second process parameter at which the difference between the predicted quality parameter and the target quality parameter is less than the criterion; and
   adjust the first process parameter to the first value and the second process parameter to the second value.

17. The system of claim 16, wherein the processor is further configured to create the model by training a neural network based on training data of a manufacturing process, wherein the training data includes the first process parameter and the second process parameter and the neural network includes a first module for the first stage and a second module for the second stage and the predicts a first quality parameter at the first stage and a second quality parameter at the second stage.

18. The manufacturing system of claim 17, wherein the processor is further configured to pass a latent representation encoding the first process parameter from the first module to the second module.

19. The manufacturing system of claim 17 or 18, wherein the processor is further configured to apply a constraint to a range of optimization for the first quality parameter and the second quality parameter.

20. The manufacturing system of claim 19, wherein the constraint is a U-shaped barrier function.

FIG. 1

FIG. 2

FIG. 3

FIG. 4

EP 4 600 772 A1

FIG. 5

FIG. 6

FIG. 7

European Patent Office / Europäisches Patentamt / European Patent Office / Office européen des brevets

**EUROPEAN SEARCH REPORT**

Application Number

EP 24 15 7120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG JING ET AL: "Integrated process-system modelling and control through graph neural network and reinforcement learning", CIRP ANNALS., vol. 70, no. 1, 1 January 2021 (2021-01-01), pages 377-380, XP093129919, NL, CH, FR ISSN: 0007-8506, DOI: 10.1016/j.cirp.2021.04.056 Retrieved from the Internet: URL:https://www.sciencedirect.com/science/article/pii/S0007850621000809> | 1-4, 7-11, 14-18,20 | INV. G05B19/418 |
| Y | * Abstract; 1. Introduction; 2. Problem description and formulation; 3. Process-system integration through GNN; 3. Process-system integration through GNN * | 5,6,12, 13,19,20 | |
| Y | Anonymous: "Barrier function - Wikipedia", , 29 November 2023 (2023-11-29), XP093172744, Retrieved from the Internet: URL:https://en.wikipedia.org/w/index.php?title=Barrier_function&oldid=1187439934 * the whole document * | 5,6,12, 13,19,20 | |
| A | CN 117 390 193 A (UNIV DALIAN TECH) 12 January 2024 (2024-01-12) * Abstract, paragraphs 82-85 * | 1-20 | |
| A | CN 116 894 180 A (UNIV NANJING AERONAUTICS & ASTRONAUTICS) 17 October 2023 (2023-10-17) * abstract * | 1-20 | |

**TECHNICAL FIELDS SEARCHED (IPC)**

G05B
G06N

The present search report has been drawn up for all claims

| Place of search | Date of completion of the search | Examiner |
|---|---|---|
| Munich | 10 June 2024 | Frey, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 7120

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2024

| Patent document cited in search report | Publication date | Patent family member(s) | Publication date |
|---|---|---|---|
| CN 117390193 A | 12-01-2024 | NONE | |
| CN 116894180 A | 17-10-2023 | NONE | |

EPO FORM P0459

For more details about this annex : see Official Journal of the European Patent Office, No. 12/82